Europäisches Patentamt

European Patent Office

Office européen des brevets

(11) Publication number: **0 142 981**
**B1**

(12) **EUROPEAN PATENT SPECIFICATION**

(45) Date of publication of patent specification: **10.10.90**

(51) Int. Cl.⁵: **G 06 F 13/42**

(21) Application number: **84307873.4**

(22) Date of filing: **14.11.84**

(54) Electronic communication clocking.

(30) Priority: **14.11.83 US 551301**

(43) Date of publication of application:
**29.05.85 Bulletin 85/22**

(45) Publication of the grant of the patent:
**10.10.90 Bulletin 90/41**

(84) Designated Contracting States:
**AT BE CH DE FR GB IT LI NL SE**

(56) References cited:

IBM TECHNICAL DISCLOSURE BULLETIN, vol. 24, no. 6, November 1981, pages 2773,2774, New York, US; S. BOWERS et al.: "Machine-cycle extension in a data processor"

IEEE ELECTRO, vol. 7, May 1982, pages 1-8, New York, US; J.T. TWARDY: "Fourth generation architecture allows performance of larger jobs with smaller programs"

(73) Proprietor: **TANDEM COMPUTERS INCORPORATED**
**19333 Vallco Parkway**
**Cupertino California 95014-2599 (US)**

(72) Inventor: **Koenig, Kenneth George**
**681 Stanfield Drive**
**Campbell, California 95008 (US)**

(74) Representative: **Ayers, Martyn Lewis Stanley et al**
**J.A. KEMP & CO. 14 South Square Gray's Inn London, WC1R 5EU (GB)**

Courier Press, Leamington Spa, England.

**Description**

In the field of intelligent communications controllers, many controllers contain intelligent logic modules, such as microprocessors. These microprocessors are designed with clocking output signals that can be readily used by custom communications electronic devices that are used to transfer data for the microprocessor. The Z80SIO is a communications device that transfers data to various communications ports from the communications module wherein the microprocessor and Z80SIO (serial input-output) device is contained. Typically, the microprocessor transfers data between itself and the communications device. The communications device transfers that data over a communications line to a plurality of communications ports. The benefit of this type of transfer is that it decreases the use of the processing power of the microprocessor on data communications.

The sequential operation of these communications chips is synchronized with the microprocessor. The microprocessor communicates various clocking signals to the communications device during the execution of various microinstructions. These microinstructions are executed within variable instruction cycles. The various clocking signals synchronize the execution rate of the SIO device and the execution rate of the microprocessor. Thus, any variation in the microprocessor instruction cycle has a timing transfer effect on the communications device. Consequently, the communications device has a variable transfer rate. Moreover, when the microprocessor is executing instructions which have a minimum instruction cycle time, the SIO device is transferring at a maximum rate. When the microprocessor executes instructions which are longer than the minimum instruction cycle time, the communications device experiences a slower transfer rate.

Thus, one of the major disadvantages of modern communications controllers using the communications device is that they will experience a variable transfer rate. It is beneficial for computer systems not to experience variable transfer rate, but beneficial to maintain the highest transfer rate possible at all times.

It is an object of the present invention to improve the transfer rate of communications controllers.

According to the present invention, there is provided an apparatus for use in a processing system of the type having a serial input/output device in data communication with a processor element operable, in response to a periodic clock signal produced by a clock generator, to execute certain instructions in a first instruction cycle time, and to execute all other instructions in a second instruction cycle time, the first instruction cycle time being shorter than the second instruction time, the apparatus being adapted to produce a synchronised clock signal proportional to one of either the first or the second instruction cycle time for controlling the transfer rate of the serial input/output device, and comprising

means included in the processor element for providing an indication of whether an instruction being executed by the processor element has the first instruction cycle time or the second instruction cycle time;

timing means including state machine means coupled to receive the periodic clock signal and the indication for sequentially assuming a first predetermined number of digital states when the processor element is executing an instruction having the first instruction cycle time, and a second number of states when the processor element is executing an instruction having the second cycle time, the timing means including means for producing first and second output signals indicative of the assumption of the first or the second predetermined number of states; and

clocking circuit means response to the first and second output signals and coupled to receive the periodic clock signal for producing the synchronised clock signal having a first predetermined number of clock pulses during the first instruction cycle time, and a second predetermined number of clock pulses during the second instruction cycle time the first and second predetermined numbers of clock cycles being respectively proportional to the first and second instruction cycle times.

As will become apparent from the following description, in the illustrated embodiment, a conventional communications device experiences a consistently high transfer rate while remaining in sync with a microprocessor even though the microprocessor is experiencing a highly variable instruction execution rate. The use of special synchronisation circuits facilitates the constant transfer rate of the communications device which is beneficial in computer systems. The communications device receives clocking signals that are not proportional to the number of instructions executed, but are proportional to the amount of execution time of the instructions. A high clocking rate to the communications device is maintained effectuating a relatively constant high communications transfer rate.

Figure 1 is a block diagram of a microprocessor and an SIO device connected to a timing circuit, a clocking circuit and an oscillator circuit.

Figure 2 is a block diagram of the timing circuit.

Figure 3 depicts the normal cycle of the timing circuit when the microprocessor is in its minimum instruction cycle.

Figure 4 depicts the extended cycle of the timing circuit when the microprocessor operates in an extended cycle mode.

Figure 5 is a block diagram of the oscillator circuit that synchronizes the entire system.

Figure 6 is a schematic diagram of the clocking circuit.

Figure 7 depicts normal cycle waveforms of the clocking circuit.

Figure 8 depicts waveforms of the clocking circuit during the extended cycle mode.

Preferred Embodiment

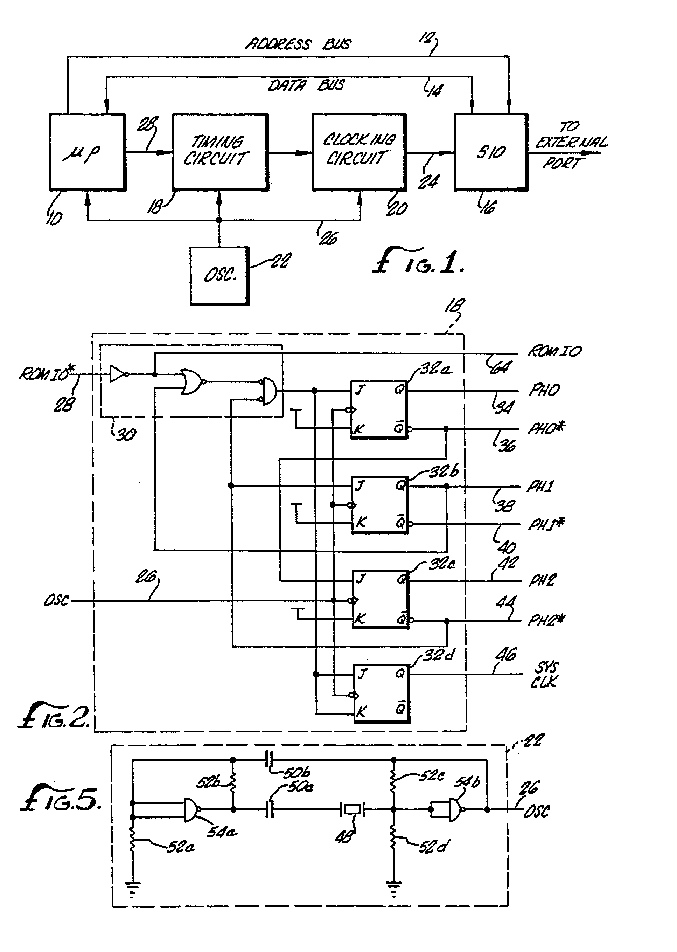

Referring to Figure 1, a microprocessor 10 executes a series of instructions usually located in a memory device, not shown. Connected to the microprocessor 10 are an address bus 12 and data bus 14 which allow data communications within the system. The transmission of serial data is through an input-output device 16. The input-output device 16 is controlled by the microprocessor 10 when executing instructions. The input-output device 16 maintains a high transfer data rate with an external port, not shown. A timing circuit 18 and a clocking circuit 20 condition signals from the microprocessor 10 and an oscillator 22 and cause the input-output device 16 to maintain a high transfer rate regardless of the types of instructions the microprocessor 10 executes. Clocking signal on line 24 to the input-output device 16 does not vary significantly as the instruction execution rate of the microprocessor 10 varies. The timing circuit 18 and the clocking circuit 20 are used for conditioning a signal on line 28 from the microprocessor 10. The microprocessor 10 varies its output signal on line 28 depending upon the type of instructions executed. The oscillator 22 is connected to the microprocessor 10, the timing circuit 18 and the clocking circuit 20 to maintain synchronism within the system.

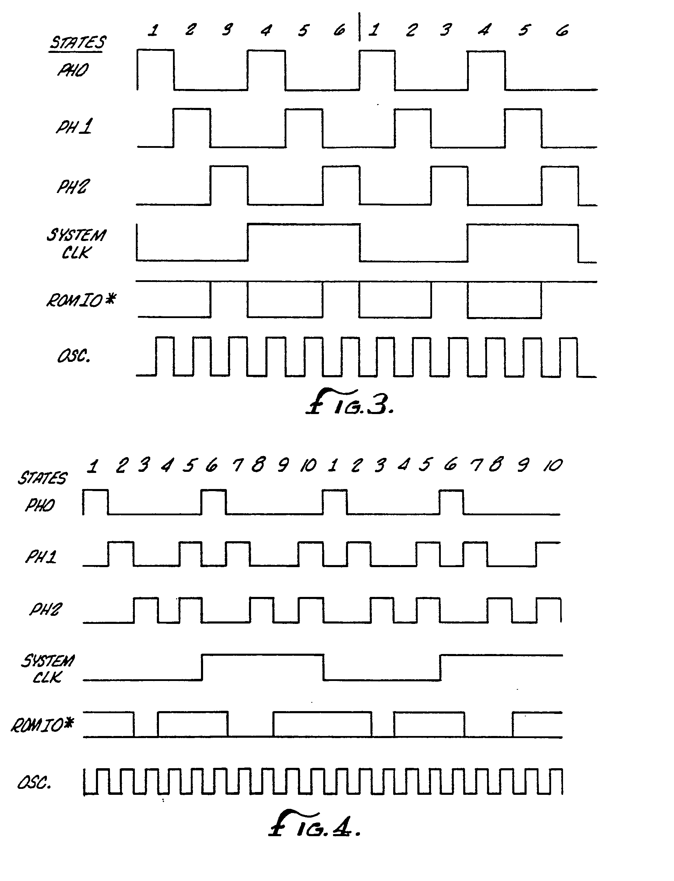

Referring to Figure 2, the timing circuit 18 uses input combinatory logic 30 which drives a series of latches 32a through 32d, thereby forming a state machine comprising the timing circuit 18. The outputs of the latches 32 are the outputs of the timing circuit 18.

The timing circuit 18 has an oscillator input from the oscillator 22 on line 26. A ROM I/O* (read-only memory input-output inverted) control signal on line 28 is transmitted by the microprocessor 10. A Motorola 6809 device is used in the preferred embodiment as the microprocessor 10. The microprocessor 10 has two types of instruction cycles which are a normal or short cycle and a long or extended cycle. The ROM I/O* signal on line 28 distinguishes those two types of instruction cycles.

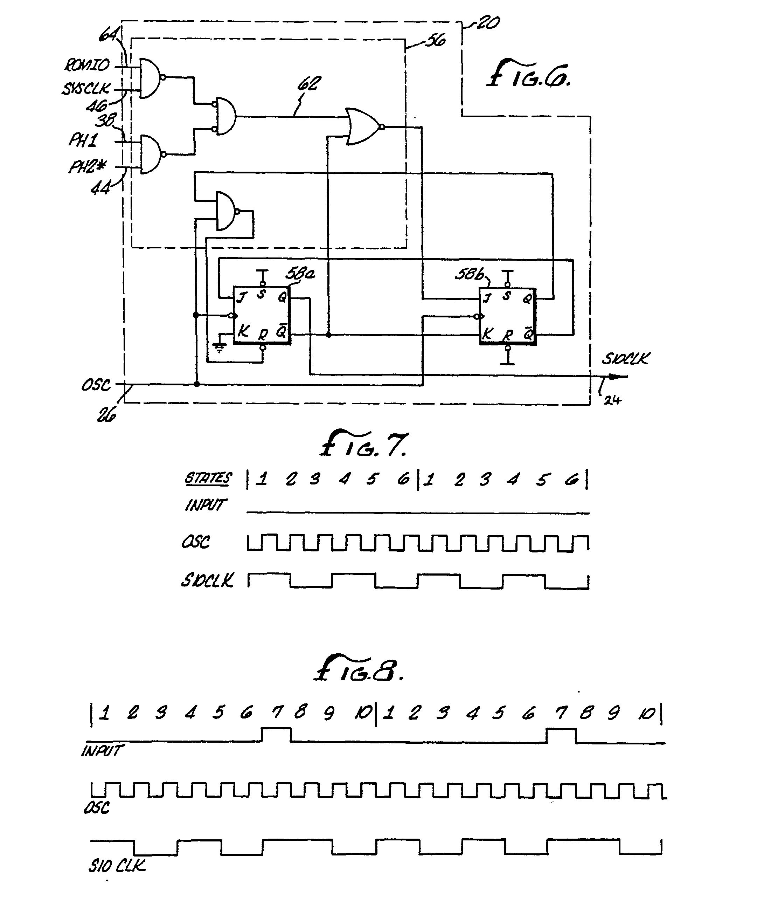

Referring to Figure 2 and Figure 3, the ROM I/O* signal on line 28 and oscillator input on line 26 are shown in timing relationship to the outputs of the timing circuit 18 and Figure 3 depicts two complete cycles of the normal cycle. Each normal cycle has six states. The output signals of the timing circuit 18 include the phase zero signal on line 34, phase zero inverted signal on line 36, phase one signal on line 38, phase one inverted signal on line 40, phase two signal on line 42, phase two inverted signal on line 44, and system clock signal on line 46.

The oscillator input on line 26 is used for clocking the latches 32 and synchronization. The ROM I/O* signal on line 28 is a high voltage state (meaning a logic one) during states three and six thereby referencing a normal cycle. States one, two, four and five are don't-care states meaning that the ROM I/O* signal on line 28 could be a zero (low voltage state) or a one (high voltage state) and those states do not affect the operation of the timing circuit 18.

Referring to Figure 4, it should be noted there that during state three, the ROM I/O* signal on line 28 is necessarily low thereby referencing an extended cycle. The timing circuit 18 senses when the ROM I/O* signal on line 28 is low during state three. The phase zero signal on line 34, phase one signal on line 38, the phase two signal on line 42, and system clock signal on line 46 have extended cycle states, as shown in Figure 4. The system clock signal on line 46 which maintains its square waveform, is now extended such that it is ten oscillator cycles long, as shown in Figure 4, rather than six, as shown in Figure 3. In both Figure 3 and Figure 4, the system clock signal on line 46 is low during the first half of the cycle and high during the last half of the instruction cycle.

Referring to Figure 5, the oscillator circuit 22 comprises an oscillator 48, a plurality of capacitors 50a and 50b, a plurality of resistors 52a, 52b, 52c and 52d, and a plurality of nand gates 54a and 54b so as to provide an oscillating signal on line 26.

Referring to Figure 6, the clocking circuit 20 is another state machine which also comprises combinatory logic 56 and a plurality of latches 58a and 58b. The output of the clocking circuit is the SIO clock signal on line 24. The SIO clock signal on line 24 is intended to drive the input-output device 16. The transfer rate of the serial input-output device 16 is to remain relatively constant during both types of instruction execution cycles.

Referring to Figure 7, which is a normal clocking cycle waveform diagram, the relationship between a node signal on line 62, the oscillator input on line 26 and the SIO clock signal on line 24 is shown. The node signal on 62 remains zero during the normal cycle. The node signal on 62 determines whether or not there is an extended or normal cycle presently being executed. The node signal on line 62 is the logical "and" function of a ROM I/O (non-inverted) signal on a line 64, system clock signal on line 46, phase one signal on line 38 and phase two inverted signal on 44.

Referring to Figure 8, which depicts an extended cycle waveform of the clocking circuit 20, in state seven, the node signal on line 62 goes high when the condition becomes true that the phase one signal on line 38 is high, phase two signal on line 42 is low, the system clock signal on line 46 is high and the ROM I/O signal on line 64 is high. This references the condition of the extended cycle.

Referring to Figure 4, state seven does not exist in the normal cycle. State seven only exists in the extended cycle because the normal cycle has only six states whereas the extended cycle has ten states.

Referring again to Figure 7, the SIO clock signal on line 60 maintains an oscillatory frequency that is one third that of the oscillator frequency during normal instruction execution cycles. One third of the oscillator frequency is the maximum rate of the SIO clock signal to the input-output device 16.

However, referring again to Figure 8, it should be noted that at the beginning of the extended cycle at state one, the SIO clock signal on line 60 assumes its normal clocking rate consistent with the normal cycle. However, upon reaching state eight, the SIO clock signal on line 60 extends a pulse width from one and a half oscillator cycles to two and a half oscillator cycles. This extension causes the addition of a long pulse. Three high level pulses during the extended cycle are of a higher frequency than that otherwise had there been only two pulses during the extended cycle.

It should now become apparent that the relative frequencies of the SIO clock signal on line 60 during the extended cycle is three tenths that of the frequency of the oscillator clock signal on line 26. This three tenth oscillator frequency is approximately equal to that of the SIO clock signal on line 24 during the normal cycle. The SIO clock signal on line 24 assumes the rate of two pulses per six oscillator clocks during the normal cycle whereas the SIO clock signal on line 24 assumes the rate of three pulses per ten oscillator clocks during the extended cycles. A relatively constant high transfer rate derived from the SIO clock signal is now possible during both the extended and normal signals.

## Claims

1. An apparatus for use in a processing system of the type having a serial input/output device (16) in data communication with a processor element (10) operable, in response to a periodic clock signal produced by a clock generator (22), to execute certain instructions in a first instruction cycle time, and to execute all other instructions in a second instruction cycle time, the first instruction cycle time being shorter than the second instruction time, the apparatus (18, 20, 22) being adapted to produce a synchronised clock signal (24) proportional to one of either the first or the second instruction cycle time for controlling the transfer rate of the serial input/output device (16), and comprising

means included in the processor element (10) for providing an indication (28) of whether an instruction being executed by the processor element has the first instruction cycle time or the second instruction cycle time;

timing means (18, 30, 32) including state machine means (30, 32) coupled to receive the periodic clock signal and the indication (28) for sequentially assuming a first predetermined number of digital states when the processor element (10) is executing an instruction having the first instruction cycle time, and a second number of states when the processor element (10) is executing an instruction having the second cycle time, the timing means (18, 30, 32) including means for producing first and second output signals (PH1, PH2*) indicative of the assumption of the first or the second predetermined number of states; and

clocking circuit means (20) responsive to the first and second output signals and coupled to receive the periodic clock signal for producing the synchronised clock signal (24) having a first predetermined number of clock pulses during the first instruction cycle time, and a second predetermined number of clock pulses during the second instruction cycle time, the first and second predetermined numbers of clock cycles being respectively proportional to the first and second instruction cycle times.

2. A system according to claim 1, and including a means (14) for communicating data between the processor element (10) and the input/output device (16);

oscillator means (22) for producing the periodic clock signal, the state machine means (30, 32) being operable in response to the periodic clock signal and a control signal identifying an instruction cycle presently in execution to generate a first signal identifying a first or a second number of successive ones of the pulses of the periodic clock signal respectively corresponding to the first or the second instruction cycle times respectively and the clocking circuit means (20) being coupled to receive the periodic clock and first signal to generate therefrom the synchronised clock signal that is proportional in the number of clock pulses produced to the first number of successive clock pulses when an instruction having the first instruction cycle time is being performed by the processor element (10) and to the second number of successive clock pulses when an instruction having the second instruction cycle time is being performed by the processor element; and

means (24) coupling the synchronised clock signal to the input/output device.

**Patentansprüche**

1. Gerät für ein Verarbeitungssystem, mit einem seriellen Ein-Ausgabe-System (16) zum durch einen Rechner (10) gesteuerten Datenaustausch, in Abhängigkeit von einem durch einen Taktgenerator (22) gelieferten periodischen Taktsignal, um zuverlässige Anweisungen in einer ersten Befehlszyklus-Zeit auszuführen und um alle anderen Anweisungen in einer zweiten Befehlszyklus-Zeit auszuführen, wobei die erste Befehlszylkus-Zeit kleiner als die zweite Befehlszyklus-Zeit ist. Die Baugruppen (18, 20, 22) sind so miteinander verbunden, daß sie proportional entweder zur ersten Befehlszyklus-Zeit oder zur zweiten Befehlszyklus-Zeit ein synchronisiertes Taktsignal (24) herstellen, um die Übertragungsrate des seriellen Ein-Ausgabe-Systems (16) zu kontrollieren.

Das Gerät beinhaltet Mittel im Rechner (10), welche eine Anzeige (28) liefern, ob eine Anweisung durch den Rechner (10) entweder in der ersten Befehlszyklus-Zeit oder in der zweiten Befehlszyklus-Zeit ausgeführt wird, eine Zeitberechnungsschaltung (18, 30, 32) mit einer Logikschaltung (30, 32), zum Empfang des periodischen Taktsignals (26) und der Kennung (28) zur sequentiellen Übernahme einer ersten bestimmten Anzahl von digitalen Befehlen, wenn der Rechner (10) den Befehl der ersten Befehlszyklus-Zeit ausgibt, und einer zweiten Anzahl von Befehlen, wenn der Rechner (10) den Befehl der zweiten Befehlszyklus-Zeit ausgibt.

Die Zeitberechnungsschaltung (18, 30, 32) beinhaltet Mittel zur Erzeugung des ersten Ausgangssignales (PH1) und eines zweiten Ausgangssignals (PH2*), welche auf die Übernahme der ersten oder der zweiten bestimmten Anzahl von Zuständen hinweisen.

Das Gerät beinhaltet weiter einen Uhrenschaltkreis (20), der auf das erste und auf das zweite Ausgangssignal (PH1, PH2*) reagiert und der verbunden ist zum Empfang des periodischen Taktsignals (26) zur Herstellung des synchronisierten Taktsignals (24), um während der ersten Befehlszyklus-Zeit eine erste bestimmte Anzahl von Zeittakten zu haben und während der zweiten Befehlszyklus-Zeit eine zweite bestimmte Anzahl von Zeittakten zu haben, wobei die erste und die zweite bestimmte Anzahl von Zeittakten jeweils proportional zu der ersten und der zweiten Befehlszyklus-Zeit ist.

2. System nach Anspruch 1, mit einem (14) zum Datenaustausch zwischen dem Rechner (10) und der Ein-Ausgabe-Einheit (16), mit einem Taktgenerator (22) zur Herstellung des periodischen Taktsignals, wobei die Logikschaltung (30, 32) in Verbindung mit dem periodischen Taktsignal (26) und dem Steuersignal zusammenwirkt, das Steuersignal den gegenwärtig ausgeführten Befehlszyklus kennzeichnet, um ein erstes Signal zu erezeugen, welches eine erste oder eine zweite Pulsfolge des periodischen Taktsignals in Abhängigkeit zu der ersten bzw. zu der zweiten Befehlszyklus-Zeit kennzeichnet, und mit einem Uhrenschaltkreis (20), der zum Empfang des periodischen Taktsignals und des ersten Signals verbunden ist, um daraus das synchronisierte Taktsignal herzustellen, welches proportional zu der Anzahl von Zeittakten ist, die bei der ersten Anzahl von nachfolgenden Zeittakten erzeugt werden, wenn eine Ausweisung durch den Rechner (10) die erste Befehlszyklus-Zeit hervorgebracht hat, und die bei der zweiten Anzahl von nachfolgenden Zeittakten erzeugt werden, wenn eine Anweisung durch den Rechner (10) die zweite Befehlszyklus-Zeit hervorgebracht hat, und mit Mitteln (24) zur Verbindung des synchronisierten Taktsignals zur Ein-Ausgabe-Einheit (16).

**Revendications**

1. Appareil pour emploi dans un système de traitement du type comportant un dispositif d'entrée/sortie série (16) en communication de données avec un élément processeur (10) qui, en réponse à un signal d'horloge périodique produit par un générateur (22) de signal d'horloge, peut opérer pour exécuter certaines instructions dans un premier temps de cycle d'instruction, et pour exécuter toutes les autres instructions dans un second temps de cycle d'instruction, le premier temps de cycle d'instruction étant plus court que le second temps de cycle d'instruction, l'appareil (18, 20, 22) étant conçu pour produire un signal d'horloge synchronisé (24) proportionnel à, soit le premier, soit le second temps de cycle d'instruction, pour commander le débit de transfert du dispositif d'entrée/sortie série (16) et comportant

des moyens inclus dans l'élément processeur (10) pour fournir une indication (28) sur la question de savoir si une instruction en cours d'exécution par l'élément processeur présente le premier temps de cycle d'instruction ou le second temps de cycle d'instruction;

des moyens de cadencement (18, 30, 32) incluant des moyens (30, 32) de réalisation d'états, couplés pour recevoir le signal d'horloge périodique et l'indication (28) pour prendre séquentiellement un premier nombre prédéterminé d'états numériques lorsque l'élément processeur (10) exécute une instruction présentant le premier temps de cycle d'instruction, et un second nombre d'états lorsque l'élément processeur (10) exécute une instruction présentant le second temps de cycle, les moyens de cadencement (18, 30, 32) incluant des moyens pour produire un premier signal et un second signal de sortie (PH1, PH2*) indicatifs du fait qu'a été pris le premier ou le second nombre prédéterminé d'états; et

des moyens (20) formant circuit de production d'un signal d'horloge sensibles au premier signal et au second signal de sortie et couplés pour recevoir le signal d'horloge périodique pour produire le signal d'horloge synchronisé (24) présentant un premier nombre prédéterminé d'impulsions d'horloge au cours du premier temps de cycle d'instruction et un second nombre prédéterminé d'impulsions d'horloge au cours du second temps de cycle d'instruction, le premier et le second nombres prédéterminés de cycles d'horloge étant respectivement proportionnels au premier et au second temps de cycle d'instruction.

2. Système selon la revendication 1 et comportant un moyen (14) pour communiquer des données entre l'élément processeur (10) et le dispositif d'entrée/sortie (16);

des moyens formant oscillateur (22) pour produire le signal d'horloge périodique, les moyens (30, 32) de réalisation d'états pouvant opérer en réponse au signal d'horloge périodique et à un signal de commande identifiant un cycle d'instruction actuellement en exécution pour générer un premier signal identifiant un premier ou un second nombre de quelques-unes, successives, des impulsions du signal d'horloge périodique, respectivement, correspondant au premier et au second temps de cycles d'instruction, respectivement, et les moyens (20) formant circuit de production d'un signal d'horloge étant couplés pour recevoir le signal d'horloge périodique et le premier signal pour, à partir de ces signaux, générer le signal d'horloge synchronisé, qui est proportionnel pour le nombre d'impulsions d'horloge produites au premier nombre d'impulsions d'horloge successives, si une instruction présentant le premier temps de cycle d'instruction est en cours d'exécution par l'élément processeur (10), et au second nombre d'impulsions d'horloge successives si une instruction présentant le second temps de cycle d'instruction est en cours d'exécution par l'élément processeur; et

des moyens (24) couplant le signal d'horloge synchronisé au dispositif d'entrée/sortie.

FIG.1.

FIG.2.

FIG.5.

STATES 1 2 3 4 5 6 | 1 2 3 4 5 6

PHO

PH1

PH2

SYSTEM
CLK

ROMIO*

OSC.

FIG.3.

STATES 1 2 3 4 5 6 7 8 9 10 1 2 3 4 5 6 7 8 9 10

PHO

PH1

PH2

SYSTEM
CLK

ROMIO*

OSC.

FIG.4.

fIG.6.

fIG.7.

fIG.8.